Europäisches Patentamt

European Patent Office

Office européen des brevets

(11) Veröffentlichungsnummer: **0 226 936 B1**

# EUROPÄISCHE PATENTSCHRIFT

(45) Veröffentlichungstag der Patentschrift: **29.04.92**

(21) Anmeldenummer: **86117125.4**

(22) Anmeldetag: **10.12.86**

(51) Int. Cl.⁵: **B29C  35/02**, B29C 35/04, A61C 13/14

(54) **Verfahren und Vorrichtung zum thermischen Polymerisieren von Kunststoffen für Dentalzwecke.**

(30) Priorität: **18.12.85 DE 3544750**

(43) Veröffentlichungstag der Anmeldung:
**01.07.87 Patentblatt  87/27**

(45) Bekanntmachung des Hinweises auf die Patenterteilung:
**29.04.92 Patentblatt  92/18**

(84) Benannte Vertragsstaaten:
**AT BE CH DE ES FR GB GR IT LI LU NL SE**

(56) Entgegenhaltungen:
EP-A- 0 091 742       DE-A- 3 146 388
DE-A- 3 209 547       DE-C- 533 711
FR-A- 661 190         FR-A- 2 419 148
US-A- 3 508 996       US-A- 4 132 518
US-A- 4 456 448

PATENT ABSTRACTS OF JAPAN, Band 10,
Nr. 55, 5. März 1986, Seite M458; & JP-A-60
204 309 (MINORU HASHIMOTO) 15-10-1986

(73) Patentinhaber: **FKB Feinwerktechnik und
Kunststoffverarbeitungs GmbH
Wehrstrasse 15
W-7238 Oberndorf/Aistaig(DE)**

Patentinhaber: **Vita Zahnfabrik H. Rauter
GmbH & Co KG
Spitalgasse 3
W-7880 Bad Säckingen(DE)**

(72) Erfinder: **Schatz, Rolf
Bindäckerstrasse 18
W-7238 Oberndorf/Boll(DE)**
Erfinder: **Link, Bernhard, Dipl.-Ing.
Almendgasse 8
W-7238 Oberndorf(DE)**
Erfinder: **Nagel, Emil, Dr. Dipl.-Chem.
Rüttmattstrasse 13
W-7880 Bad Säckingen(DE)**

(74) Vertreter: **Neymeyer, Franz, Dipl.-Ing. (FH)
Haselweg 20
W-7730 Villingen 24(DE)**

EP 0 226 936 B1

## Beschreibung

Die Erfindung betrifft ein Verfahren zum thermischen Polymerisieren von Kunststoffen für Dentalzwecke, in einem geschlossenen Raum eines Druckbehälters, in welchem ein das Plymerisationsgut allseits umschließendes, geheiztes Inertgas oder Luft unter Überdruck eingesetzt wird, sowie eine Vorrichtung zur Durchführen des Verfahrens, bestehend aus einem mittels eines Deckels oder einer Türe verschließbaren Druckbehälter mit einer eingebauten, das Inertgas bzw. die Luft erwärmenden und durch einen Temperaturfühler steuerbaren Heizeinrichtung und einem Druckgas- oder Druckluftanschluß.

Die bisher in den den Dentallabors bei der Herstellung von Zahnersatz verwendeten Druck-Polymerisationsgeräte sind nur für Polymerisation geeignet, die in einem flüssigen Medium, zum Beispiel Wasser oder Glyzerin, stattfinden, welches beispielsweise auf eine Polymerisationstemperatur von 120° erhitzt wird und zugleich unter einem Druck von beispielsweise 6 bar steht. Dabei wird meist bei der Wasserpolymerisation für jeden neuen Polymerisationsvorgang der Druckbehälter des Polymerisationsgerätes mit frischem, kaltem Wasser gefüllt, in welches das Polymerisationsgut vollständig eingetaucht werden muß. Bei den dort verwendeten Polymerisaten komme es zur Erreichung eines guten Polymerisationsergebnisses wesentlich auf die exakte Einhaltung der Polymerisationstemperatur und auch auf eine gleichmäßige Verteilung der Temperatur im Hohlraum des Druckbehälters an. Diese Forderungen lassen sich mit Wasser als Mediumin, in dem die Polymerisation stattfindet, leicht und gut erfüllen, weil Wasser ein guter Wärmeleiter ist. Andererseits hat aber die Verwendung von Wasser als Polymerisationsmedium den Nachteil, daß zu seiner Erwärmung auf eines bestimmte Polymerisationstemperatur relativ viel Wärmeenergie benötigt wird. Außerdem ist seine Handhabung insofern umständlich, als es für jeden neuen Polymerisationsvorgang neu in den Druckbehälter eingefüllt und danach wieder abgelassen werden muß. Zudem setzt die Verwendung von Wasser als Polymerisationsmedium einen Druckbehälter voraus, der nur von oben zugänglich ist.

Um ein langsames Erwärmen und Abkühlen des Kunststoffens und damit Spannungen in den mit unterschiedlichen Wanddicken versehenen Formkörpern zu vermeiden, sieht ein bekanntes Verfahren (DE-OS 2 021 194) der eingangs genannten Art vor, daß die Formkörper mit einer sie umgebenden Kontaktflüssigkeit in Kontakt gebracht werden, solange diese noch eine unter der Polymerisationstemperatur liegende Temperatur hat, daß die Formkörper dann zusammen mit der Kontaktflüssigkeit auf Polymerisationstemperatur erhitzt und schließlich langsam abgekühlt werden. Dazu ist ein zusätzlicher Behälter vorgesehen, welcher in einem Zuströmkanal zum Innenraum dieses Behälters angeordnet oder als Zuströmkanal zum Innenraum dieses Behälters ausgebildet ist.

Abgesehen davon, daß auch hierbei als Kontaktmedium eine Flüssigkeit verwendet wird, die öfter ausgewechselt werden muß, ist zur Aufnahme des Polymerisationsguts eine zusätzlicher Behälter erforderlich, durch den die Vorrichtung verteuert und in der Handhabung umständlicher wird.

Bei einem anderen Verfahren der Polymerisation wird eine vorbestimmte Wassermenge in einen heizbaren Druckbehälter mit dem Polymerisationsgut eingefüllt und nach dem Verschließen des Druckbehälters durch Aufheizen verdampft. Es entsteht dabei ein Gemisch aus heißer Luft und Wasserdampf. Dieses Verfahren hat sich nicht sonderlich bewährt, da ungleiche Aushärtungen mit ungleichmäßigen Härtegraden und ungleichmäßigen Farbtönen beobachtet wurden.

Außerdem wurde bei diesem Verfahren in noch stärkerem Maße als beim Polymerisieren im Wasserbad Störungen an der Grenzfläche Metall/Kunststoff durch Bildung von Randspalten beobachtet. Offensichtlich ist bei diesem Verfahren die Wärmeübertragung von der Heizquelle zum Polymeristionsgut ungenügend.

In USA ein Gerät auf den Markt gekommen (Justi Paktor, H.D. Justi Company, Oxnad, CA) welches aus einer Art Schnellkochtopf mit Deckel besteht, welcher mit Gaszufuhr, Manometer, Thermometer und Überdruckventil versehen ist. Der erzielbare Druckbereich liegt zwischen 1,4 und 2,7 bar. Die Temperaturen liegen zwischen 120 und 204° C und werden durch eine eingebaute 5-stufige Elektroheizplatte erzeugt. Wegen des geringen Drucks kann in diesem Gerät nur ein einziges Kunststoffmaterial verwendet werden, nämlich 100% Polyglycoldimethacrylat. Dieses Material ist aber qualitativ nicht vergleichbar mit den heute üblicherweise eingesetzten gefüllten oder ungefüllten Kunststoffen für Dentalzwecke, die durch entsprechende Beimischungen bezüglich der Antriebsfestigkeit, Schlagzähigkeit, Härte, Farbe etc. optimiert und den natürlichen Zahn sehr ähnlich geworden sind. Sie erfordern aber auch die exakte Einhaltung der Polymerisationsbedingungen. Dieses Gerät benötigt eine sehr lange Aufheizzeit. Es besitzt keine zwangsgeführte Luftumwälzung in seinem Innenraum, so daß eine gleichmäßige Temperaturverteilung nicht gewährleistet ist.

Während es einerseits bekannt ist, bei einem Niederdruckpreßverfahren, bei dem die Gießform in einem Autoklaven unter allseitigem Druck steht, durch Umwälzung heißer Luft eine gleichmäßige Beheizung der Form zu erzielen (Kunststoff-Handbuch Band 1, Grundlagen, Karl Hanser Verlag, München, Wien 1975, Seite 1122/1123) weiß die Fachwelt auch, daß die Polymerisation von Kunststoffen für Dentalzwecke in einem Warmluftschrank erheblich längere Zeiten erfordert als die Polymerisation in einem Wasserbad, nämlich beispielsweise 10 Stunden bei 100°C. Die Polymerisation im Warmluftschrank hat deshalb bisher nur Anwendung gefunden, wenn dieser Arbeitsgang in der arbeitsfreien Nachtzeit durchgeführt werden konnte (Kunststoff-Handbuch Band IX, Polymethacrylate, Karl Hanser Verlag, München 1975, Seite 867). Gerade diesen langen Zeitbedarf auf eine wirtschaftlich vertretbare Zeitspanne zu verkürzen ist Ziel der vorliegenden Erfindung.

Eine Lösung dieses Ziels ist auch nicht der DE-A-31 46 388 zu entnehmen. Diese Druckschrift betrifft einen Dentalofen zur Erwärmung zahntechnischer Güter, der als Auswachs- bzw. Trockenofen verwendet werden soll und der mit Temperaturen zwischen 350°C und 1100°C arbeitet. Es ist bei diesem Dentalofen zwar auch eine Umwälzung der Heißluft mittels eines Heizgebläses vorgesehen. Auf die Erzielung einer gleichmäßigen Temperatur und Temperaturverteilung innerhalb des Ofens ist aber dort kein besonderer Wert gelegt. Es ist dort auch nicht angegeben, wie lange die Aufheizzeit dauern soll. Besondere Mittel zur Zwangsführung der Umwälzluft innerhalb des Ofens sind auch nicht angegeben.

Der Erfindung liegt die Aufgabe zugrunde, ein Verfahren und eine Vorrichtung zur Durchführung des Verfahrens der eingangs genannten Art zu schaffen, durch welches diese Nachteile beseitigt sowie kürzere Aufheizzeiten und ein geringerer Engerieverbrauch erreicht werden können.

Gelöst wird diese Aufgabe verfahrensgemäß dadurch, daß das Intergas bzw. die Luft im geschlossenen Raum des Druckbehälters unter einem Druck von mindestens 4 bar, vorzugsweise 5 bis 10 bar, während einer kurzen, höchstens zwei Minuten dauernden Aufheizzeit auf 90°C bus 120°C erwärmt und sowohl während der anschließenden Polymerisationsphase in einem zwangsgeführten, vor einer Heizebene im Zentralbereich des Raumes stehenden axialen Strom, der hinter der Heizebene in zumindest annähernd gleichmäßiger Verteilung das Polymerisationsgut umströmt und der in Gegenstromrichtung entlang der Druckbehälterwand wieder zu seinem Ursprung zurückkehrt, dauernd umgewälzt wird.

Für Dentallabors hat diese Verfahren, abgesehen davon, daß kein Wasser mehr benötigt wird, den Vorteil, daß zur Erhitzung des gasförmigen Mediums im geschlossenen Raum des Druckbehälters wesentlich weniger Wärmeenergie benötigt wird, daß aber trotzdem die für die Durchführung der Polymerisation erforderliche Temperatur ausreichend genau und auch ausreichend homogen im Innenraum des Druckbehälters erreicht wird und über die Dauer des Polymerisationsvorganges, die mehrere Minuten betragen kann, zur Verfügung steht. Das Aufheizen des Mediums auf die gewünschte Polymerisationstemperatur kann in einer wesentlich kürzeren Zeit erfolgen, als dies mit der gleichen Heizleistung bei Wasser als Polymerisationsmedizm möglich ist.

Als Intergas kommt insbesondere Stickstoff aus Kohlendioxyd in Frage. Prinzipiell können aber auch Helium oder Argon eingesetzt werden.

Des weiteren ist es Aufgabe der Erfindung, eine Vorrichtung zur Durchführung des Verfahrens nach Anspruch 1 zu schaffen, die aus einem mittels eines Deckels oder einer Türe dicht verschließbaren Druckbehälters mit einer eingebauten, das Medium erwärmenden und durch einen Temperaturfühler steuerbaren Heizeinrichtung sowie mit einem Druckluft- oder Druckgasanschluß versehenen Druckbehälter besteht, bei der gewährleistet ist, daß im Innenraum des Druckbehälters die zur Ingangsetzung und Aufrechterhaltung des Polymerisationsvorganges erforderliche Temperatur des das Polymerisationsgut umgebenden, gasförmigen Mediums in möglichst kurzer Zeit erreicht und möglichst genau über die gesamte Polymerisationsdauer hinweg aufrechterhalten wird und an der gesamten Oberfläche des Polymerisationsgutes gleichmäßig zur Verfügung steht.

Gelöst wird diese Aufgabe dadurch, daß im Druckbehälter auf der einem Objekthalter gegenüberliegenden Seite einer in einer Ebene liegenden Heizspirale ein elektromotorisch angetriebenes Axialgebläserad angeordnet ist, welches eine durch die Heizspirale und eine zwischen der Heizspirale und dem Objekthalter angeordnete, mit seitlichen Leitelementen versehen, strömungsdurchlässige, gitter-, netz- oder siebartige Stauscheibe hindurch auf das Polymerisationsgut gerichtete Luft- bzw. Gasströmung erzeugt.

Durch diese Anordnung wird nicht nur eine kontinuierliche und gleichmäßige Umwälzung des Mediums innerhalb des Druckbehälters gewährleistet, sondern auch sichergestellt, daß während des gesamten Polymerisationsvorganges immer genügend Wärmeenergie mit der gewünschten Temperatur an das Polymerisationsgut herangeführt wird und zur Aufrechterhaltung des Polymerisationsvorganges während der vorgesehenen Polymerisationsdauer zur Verfügung steht.

Dabei ist das Axial-Gebläserad innerhalb des Druckbehälters dort angeordnet, wo es am wenigsten stört und wo es außerdem bezüglich der unmittelbaren Heranführung der von der Heizeinrichtung erzeugten Wärme an das Polymerisationsgut die beste Wirkung hat. Auch wird eine erhebliche Verbesserung der Wärmeverteilung über den gesamten Querschnitt des Druckbehälterinnenraumes und zugleich eine Homogenisierung der vom Gebläserad erzeugten Luft- bzw. Gasströmung erreicht und die Wirkungsweise des Axialgebläserades verbessert.

Die Erfindung ist auch insofern von Vorteil, als die vorgesehene Anordnung der Heizeinrichtung und des Gebläserades am wenigsten hinderlich, leicht montierbar und räumlich am besten unterbringbar ist. Bei Geräten, bei denen die Beschickungsöffnung nicht oberseitig, sondern frontseitig angeordnet ist, besteht zudem der Vorteil, daß die Stellfläche, auf welcher der oder die Objekthalter mit dem Polymerisationsgut abgestellt wird, nicht parallel zur Ebene der Heizspirale, sondern quer dazu verläuft und somit der vom Gebläserad erzeugten Strömung den geringsten Widerstand entgegensetzt.

Während die Ausgestaltung gemäß Anspruch 4 der Verbesserung der Strömungsverhältnisse innerhalb des geschlossenen Polymerisationsraumes dient, wird durch die Ausgestaltung gemäß Anspruch 5 eine weitere Verbesserung dieser Strömungsverhältnisse und zugleich ene verbesserte Wärmeverteilung innerhalb des gesamten Polymerisationsraumes im Druckbehälter erreicht.

Die Anordnung des Temperaturfühlers gemäß Anspruch 6 gewährleistet nicht nur die exakte Erfassung der im gesamten Polymerisationsraum herrschenden Temperatur, sondern auch einen Schutz des Temperaturfühlers gegen äußere Einflüße.

Durch die Anordnung des Druckluft- bzw. Druckgasanschlusses gemäß Anspruch 7 wird sichergestellt, daß das zugeführte Druckmedium zunächst zur Heizspirale befördert, dort erwärmt und mit der vom Gebläserad erzeugten Strömung zur Verteilung kommt.

Eine andere Möglichkeit der Anordnung des Gebläserades und der Gestaltung des Druckbehälters ist Gegenstand des Anspruches 8, wobei es möglich ist, die homogene Temperaturverteilung innerhalb des Druckbehälters durch die Ausgestaltung gemäß Anspruch 9 zu verbessern.

Durch die Ausgestaltung gemäß Anspruch 10 wird die Möglichkeit geschaffe, im selben Druckbehälter auch Strahlungspolymerisationen durchzuführen, wobei durch die Verspiegelung des Gebläserades die Strahlung auch auf die dem Strahler abgewandten Flächen des Polymerisationsgutes reflektiert wird.

Durch die Aufrechterhaltung einer Vorwärmtemperatur im Druckbehälter, die durch die Maßnahme des Anspruches 11 ermöglicht wird, kann die Aufheizzeit auf die benötigte Polymerisationstemperatur wesentlich verkürzt werden.

Anhand der Zeichnung wird nun im folgenden die Erfindung näher erläutert. Es zeigt:

Fig. 1  einen Druckbehälter eines Polymerisationsgerätes in Frontansicht mit abgenommenen Deckel;

Fig. 2  einen Schnitt II-II aus Fig. 1;

Fig. 3  ein gitterartiges Einsatzteil in Draufsicht;

Fig. 4  eine andere Ausführungsform des Druckbehälters eines Polymerisationsgerätes in Frontansicht bei abgenommenem Verschlußteil und ohne das gitterartige Einsatzteil;

Fig. 5  die gleiche Ansicht wie Fig. 4 mit eingesetztem gitterartigen Einsatzteil und

Fig. 6  einen Schnitt VI-VI aus Fig. 5.

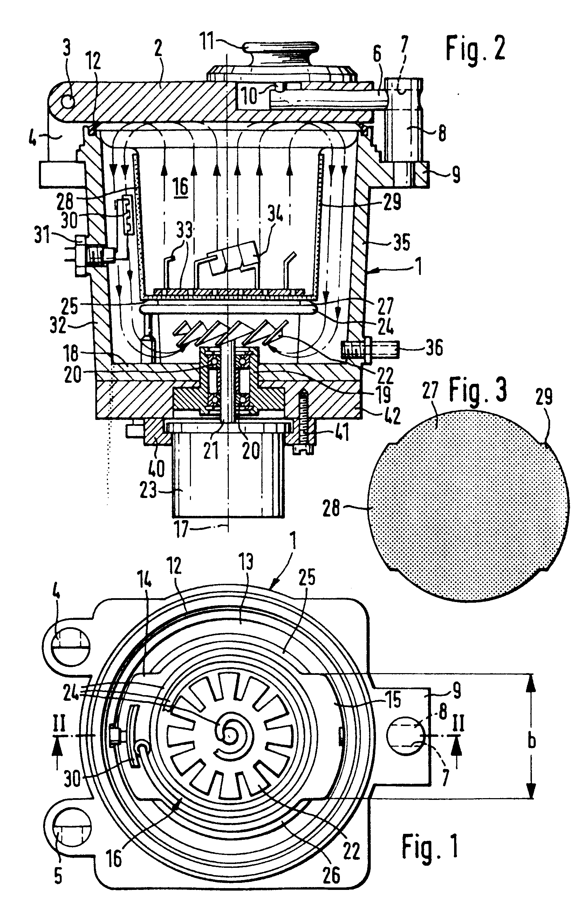

Der in den Fig. 1 und 2 dargestellte Druckbehälter 1 hat eine im wesentlichen kreisrunde, sich nach unten leicht konisch verengende topfartige Form. Seine obere Öffnung ist durch einen Deckel 2 verschließbar, welcher mittels einer Lagerwelle 3 schwenkbar an Scharnierzapfen 4 und 5 gelagert ist. In seiner in Fig. 2 dargestellten Schließposition ist der Deckel 2 mittels eines Riegelstiftes 6, der in die horizontale Bohrung 7 eines an einem Ösenvorsprung 9 aufrecht stehend befestigten Riegelbolzen 8 einschiebbar ist, verriegelbar. Durch einen Querstift 10 steht der Riegelstift 6 mit einem manuell betätigbaren Schieber 11 in Verbindung. Die ringförmige Stirnfläche des Druckbehälters 1 ist mit einer ringförmigen Lippendichtung 12 versehen, welche dichtend an der Deckelunterseite anliegt. Der Druckbehälter ist insgesamt als Druckgußteil ausgebildet und mit einer relativ dicken Wandung 13 versehen in welche sich zwei diametral gegenüberliegende, nischenartige Erweiterungen 14 und 15 eingearbeitet sind, deren Breite b etwa dem halben mittleren Innendurchmesser des Druckbehälters 1 entspricht. Die Bedeutung dieser sich über die gesamte Höhe des Innenraumes 16 erstreckenden, nischenartigen Erweiterungen 14 und 15 wird nachstehend noch näher erläutert. Konzentrisch zur vertikalen Symmetrieachse 17 des Druckbehälters 1 ist in dessen Bodenwand 18 mittels einer Lagerbuchse 19 und darin angeordneten Kugellagern 20 die Welle 21 eines Axial-Gebläserades 22 drehbar gelagert, das von einem Elektromotor 23 angetrieben wird, und dabei eine im Zentrum des Innenraumes 16 von unten nach oben und in den nischenartigen Erweiterungen von oben nach unten gerichtete Strömung erzeugt. Der Elektromotor 23 ist mittels eines Flanschringes 40 und Schrauben 41 an einer Sockelscheibe 42 befestigt, die ihrerseits an der Bodenwand 48 angeschraubt ist. Unmittelbar über dem Axial-Geläserad 22 ist eine Heizeinrichtung 24 in Form einer elektrischen Heizspirale angeordnet, deren Spiralwindungen in einer parallel zur Rotationsebene des Axialgebläserades 22 verlaufenden Ebene mit geringen radialen Windungsabständen angeordnet ist. Dabei ist der vertikale bzw. axiale Abstand des Axial-Gebläserades 22 von der Innenfläche der Bodenwand 18 geringer als sein Abstand von der Heizeinrichtung 24, jedenfalls aber so groß gewählt, daß das Axial-Gebläserad seine axiale Ansaugwirkung in ausreichendem Maße entfalten kann.

Unmittelbar über der Heizeinrichtung 24 liegt auf zwei ringsegmentartigen, beidseitig der nischenartigen Erweiterungen 14 und 15 angeordneten in einer parallel zur Bodenwand 18 verlaufenden Ebene liegenden Auflageflächen 25 und 26 eine aus einem feinmaschigen Metalldrahtgitter bestehende Stauscheibe 27 auf, welche die gesamte Querschnittsfläche der Heizeinrichtung 24 abdeckt. Diese Stauscheibe 27 ist zudem mit seitlichen, sich diametral gegenüberliegenden, kreisbogenförmig gewölbten Wandelementen 28 und 29 versehen, welche in die nischenartigen Erweiterungen 14 und 15 hineinpassen und diese gegen den übrigen Innenraum 16 abdecken. Auch diese Wandelemente 28 und 29 bestehen aus einem feinmaschigen Metalldrahtgitter wie die Stauscheibe 27 und sind einstückig an dieser angeformt. Wie aus Fig. 2 ersichtlich ist, reichen diese Wandelemente 28 und 29 in Achsrichtung nicht bis zur Innenfläche des Deckels 2, vielmehr enden sie in einem Abstand von der Innenfläche des Deckels 2, der etwa der radialen Tiefe der Erweiterungen 14 oder 15 entspricht, so daß die an dieser Innenfläche abprallende Strömung jeweils etwa hälftig geteilt ungehindert in die nischenartigen Erweiterungen 14 und 15 gelangen und sich dort nach unten fortsetzen kann. In der Erweiterung 14 ist etwa in halber Höhe über der Heizeinrichtung 24 ein Temperaturfühlerplättchen 30 angeordnet, dessen elektrische Anschlußleitungen mit einer Anschlußbuchse 31 in Verbindung stehen, welche in dem Wandabschnitt 32 der nischenartigen Erweiterung 14 dichtend eingeschraubt ist. Dieses Temperaturfühlerplättchen 30 ist mit einer elektrischen Temperatursteuer- und Regeleinrichtung verbunden, mit deren Hilfe die gewünschte Polymerisationstemperatur eingestellt und geregelt werden kann. Derartige Steuer- und Regeleinrichtungen sind an sich bekannt und bedürfen deshalb hier keiner näheren Erläuterung. Die auf den Stellflächen 25 und 26 aufliegende Stauscheibe 27 dient gleichzeitig als Stellfläche für Objekthalter 33 an denen beispielsweise künstliche Zähne 34, Zahnkronen od. dgl. befestigt sein können. In der Regel bestehen solche Objekthalter aus gelochten Scheiben oder Drahtbügeln, welche lose auf die Stauscheibe 27 aufgesetzt werden und im übrigen so gestaltet sind, daß sie dem von der Heizeinrichtung 24 erhitzten und die perforierte, feinmaschige Stauscheibe 27 durchdringende Luft- bzw. Gasströmung möglichst wenig behindern.

Im dünneren Wandungsabschnitt 35 der nischenartigen Erweiterung 15 ist in einer unterhalb des Axial-Gebläserades 22 liegenden Ebene ein Rohranschlußstutzen 36 für den Anschluß einer Druckgas- oder Druckluftquelle vorgesehen. Diese Anordnung des Rohranschlußstutzens 36 ist so getroffen, damit die durch ihn in den Druckbehälter 1 eingeführte kalte Druckluft oder das kalte Druckgas unmittelbar in den Ansaugbereich des Axial-Gebläserades 22 gelangt und erst erwärmt wird bevor es mit dem Polymerisationsgut 34 in Berührung kommt.

Die vorstehend beschriebene Vorrichtung, die zur Durchführung thermischer Polymerisationen, insbesondere für zahntechnische Zwecke dient, arbeitet in folgender Weise:
Wenn nach dem Einsetzen des Polymerisationsgutes, beispielsweise in Form von künstlichen Zähnen 34 oder Zahnkronen mit Hilfe des auf die Stauscheibe 27 abgestellten Objektträgers 33 der Deckel 2 geschlossen und verriegelt ist, wird mit Hilfe der zur weiteren Ausrüstung des Polymerisationsgerätes gehörenden elektrischen Steuereinrichtung die Druckluftzufuhr bzw. Druckgaszufuhr und die Heizeinrichtung 24 sowie der Gebläsemotor 23 eingeschaltet. Wenn in dem Druckbehälter 1 der voreinstellbare Druck von beispielsweise 6 bar erreicht ist, wird die weitere Druckluftzufuhr bzw. Druckgaszufuhr abgestellt, während die Heizeinrichtung 24 noch so lange eingeschaltet bleibt, bis der Temperaturfühler 30 die voreingestellte Polymerisationstemperatur registriert und die weitere Steuerung der Heizeinrichtung 24 übernimmt, damit die eingestellte Temperatur während der erforderlichen Polymerisationsdauer exakt erhalten bleibt. Durch den während der gesamten Polymerisationsdauer eingeschalteten Gebläsemotor 23 erzeugt das von ihm angetriebene Axialgebläserad 22 eine größtenteils in Richtung der in der Fig. 2 eingezeichneten Pfeillinien verlaufende Luft- bzw. Gasumwälzung innerhalb des geschlossenen Druckbehälters 1, wobei der erzeugte Gas- bzw. Luftstrom vom Lüfterrad 22 durch die Windungen der Heizeinrichtung 24 zunächst zu der als Drosselorgan und Wärmeverteiler wirkenden Stauscheibe 27 gelangt, wo er durch dessen feinmaschige Perforation ziemlich gleichmäßig über den gesamten Querschnitt verteilt weiter aufsteigt und das Polymerisationsgut 34 umströmt, um danach an der Innenseite des Deckels 2 abzuprallen bzw. umgeleitet zu werden und dabei in die nischenartigen Erweiterungen 14 und 15 die Strömungsbewegung in entgegengesetzter Richtung aufzunehmen und um dann schließlich wieder in den Ansaugbereich des Axiallüfterrades 22 zu gelangen und den Kreislauf von neuem zu beginnen. Dabei dienen die Stauscheibe 27 und die seitlich daran angeordneten Wandelemente 28 und 29 nicht nur als Strömungsleitelemente sondern zugleich auch als Wärmeverteiler, und sie tragen dazu bei, daß in dem gesamten Innenraum 16 und in den nischenartigen Erweiterungen 14 und 15 an jeder Stelle die gleiche Temperatur und auch der gleiche Druck herrscht, so daß mit einem einzigen Temperaturfühler 30 eine exakte Temperaturerfassung und eine für eine gleichmäßige Polymerisation ausreichend genaue Temperatursteuerung möglich ist.

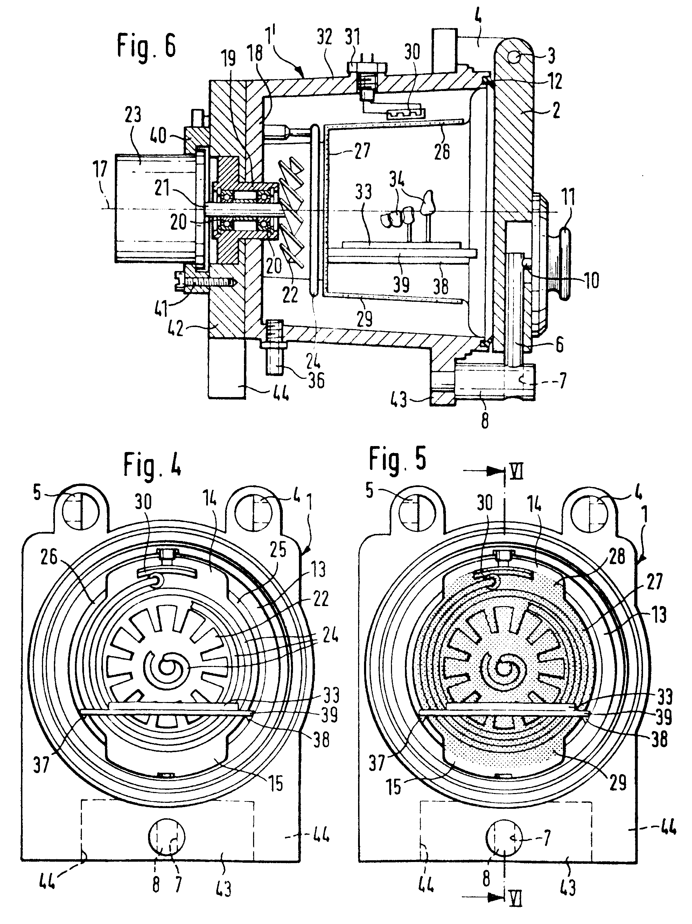

Die in den Fig. 4 bis 6 dargestellte Ausführungsform unterscheidet sich von derjenigen der Fig. 1 und 2 lediglich bezüglich ihrer Gebrauchslage. Während der in den Fig. 1 und 2 dargestellte Druckbehälter 1 eine Gebrauchslage hat, in welcher seine Symmetrieachse 17 eine Vertikallage einnimmt, ist der in den Fig. 4 bis 6 dargestellte Druckbehälter 1' so konzipiert, daß seine Symmetrieachse 17 in Gebrauchslage horizontal verläuft und der Deckel 2 in der Art einer Klappe benutzt wird. Statt dessen könnte auch vorgesehen sein, die Scharnierzapfen 4 und 5 mit der Gelenkwelle 3 so anzuordnen, daß die Schwenkachse vertikal verläuft und der Deckel 2 wie eine Tür geöffnet und geschlossen werden kann. Um in der gesamten Gebrauchslage benutzt werden zu können, kann der Druckbehälter 1' in ein noch weitere Gerätebestandteile beinhaltendes Gehäuse eingebaut und/oder, wie in den Fig. 4 bis 6 dargestellt, mit Standleisten 43 und Standfüßen 44 versehen sein. Ein weiterer Unterschied gegenüber der Ausführungsform der Fig. 1 und 2 besteht darin, daß die auch hier vorhandene jedoch in einer vertikalen Ebene angeordnete Stauscheibe 27 nicht als Stellfläche dient, sondern daß als Stellfläche eine horizontale, auf Stützrippen 37 und 38 aufsitzende und somit quer zur Ebene der Stauscheibe 27 verlaufende Stellplatte 39 vorgesehen ist, auf welche Objekthalter 33 in der in Fig. 6 dargestellten Weise abgestellt werden können. Diese Anordnung hat den Vorteil, daß der Objekthalter 33 dem anströmenden Gas bzw. der anströmenden Luft einen wesentlich geringeren Widerstand entgegensetzt als dies bei der Anordnung der Fig. 2 der Fall ist.

Alle übrigen Anordnungen und Funktionen sind gleich wie bei der Ausführungsform der Fig. 1 und 2, so daß auf die dazugehörige Beschreibung verwiesen werden kann.

Es besteht selbstverständlich auch die Möglichkeit, einen Behälter mit einem zylindrischen oder elliptischen Innenraum vorzusehen und diesen in analoger Weise mit einem Axial-Gebläserad auszurüsten. Dabei kann das Gebläserad aber auch so angeordnet sein, daß die Strömungsrichtung quer zur Zylinderachse bzw. zur Symmetrieachse des elliptischen Hohlraumes verläuft. Es kann auch zweckmäßig sein, als Strömungsleitelemente und Wärmeverteiler im Innenraum perforierte Wandelemente dreiseitig anzuordnen, die von den Seitenwänden gewissen Abstand aufweisen, damit die Strömungskreisläufe entstehen können, die durch die Anordnung dieser Wandelemente begünstigt werden.

Zweckmäßig ist es auch, eine Vorwärmthermostatschaltung vorzusehen, mittels welcher die Innentemperatur des Druckbehälters auf einer konstanten Vorwärmtemperatur von beispielsweise 80°C erhalten werden kann, damit das Aufheizen auf die höherliegende Polymerisationstemperatur von beispielsweise 120° in einer kürzeren Zeit erfolgen kann.

Es ist auch die Möglichkeit gegeben, beispielsweise auf der Innenseite des Deckels 2, welche dem Axial-Lüfterrad gegenüberliegt, eine zur Strahlungspolymerisation geeignete Strahlungsquelle z. B. einen UV-Strahler anzuordnen und zugleich die gegen den Strahler gerichteten Flächen des Axial-Gebläserades zu verspiegeln, damit die Polymerisationsstrahlung auch auf die der Strahlungsquelle abgewandten Flächen des Polymerisationsgutes reflektiert wird.

**Patentansprüche**

1. Verfahren zum thermischen Polymerisieren von Kunststoffen für Dentalzwecke in einem geschlossenen Raum eines Druckbehälters (1, 1'), in welchem ein das Polymerisationsgut (34) allseits umschließendes, geheiztes Inertgas oder Luft unter Überdruck eingesetzt wird dadurch gekennzeichnet,
daß das Inertgas bzw. die Luft im geschlossenen Raum (16) des Druckbehälters (1, 1') unter einem Druck von mindestens 4 bar, vorzugsweise 5 bis 10 bar, während einer kurzen, höchstens zwei Minuten dauernden Aufheizzeit auf 90°C bis 120°C erwärmt und sowohl während der Aufwärmzeit als auch während der anschließenden Polymerisationsphase in einem zwangsgeführten, vor einer Heizebene im Zentralbereich des Raumes entstehenden axialen Strom, der hinter der Heizebene in zumindest annähernd gleichmäßiger Verteilung das Polymerisationsgut (34) umströmt und der in Gegenstromrichtung entlang der Druckbehälterwand wieder zu seinem Ursprung zurückkehrt, dauernd umgewälzt wird.

2. Verfahren nach Anspruch 1, dadurch gekennzeichnet, daß das Inertgas aus einem der folgenden Gase besteht:
Stickstoff, Kohlendioxid, Helium, Argon.

3. Vorrichtung zur Durchführung des Verfahrens nach Anspruch 1, bestehend aus einem mittels eines Deckels ( 2) oder einer Türe (2) verschließbaren Druckbehälter (1, 1') mit einer eingebauten, das Inertgas bzw. die Luft erwärmenden und durch einen Temperaturfühler (30) steuerbaren Heizeinrichtung (24) und einem Druckgas-oder Druckluftanschluß (36), dadurch gekennzeichnet,

daß im Druckbehälter (1, 1') auf der einem Objekthalter (33) gegenüberliegenden Seite einer in einer Ebene liegenden Heizspirale (24) ein elektromotorisch angetriebenes Axialgebläserad (22) angeordnet ist, welches eine durch die Heizspirale (24) und eine zwischen der Heizspirale (24) und dem Objekthalter (33) angeordnete, mit seitlichen Leitelementen (28, 29) versehene,

strömungsdurchlässige, gitter-, netz-oder siebartige Stauscheibe (27) hindurch auf das Polymerisationsgut (34) gerichtete Luft- bzw. Gasströmung erzeugt.

4. Vorrichtung nach einem der Ansprüche 2 oder 3, dadurch gekennzeichnet, daß das Axial-Gebläserad (27) von der anströmseitigen Innenwandfläche des Druckbehälters (1, 1') einen gleich großen oder größeren Abstand aufweist wie z.B. als von der Heizeinrichtung (24).

5. Vorrichtung nach einem der Ansprüche 2 bis 4, dadurch gekennzeichnet, daß die Heizeinrichtung (24) und das Axial-Gebläserad (22) in der Nähe der dem Deckel (2) bzw. der Tür (2) gegenüberliegenden Innenfläche des Druckbehälters (1, 1') und im wesentlichen parallel dazu verlaufend angeordnet ist.

6. Vorrichtung nach Anspruch 5, dadurch gekennzeichnet, daß der Innenraum (16) des Druckbehälters (1, 1') eine im wesentlichen zylindrische oder leicht konische Form und zwei sich diametral gegenüberliegende, nischenartige Erweiterungen (14, 15) aufweist.

7. Vorrichtung nach Anspruch 6, dadurch gekennzeichnet, daß die nischenartigen Erweiterungen (14, 15) wenigstens teilweise durch gitter-, netz- oder siebartige Wandelemente abgedeckt sind, welche sich von der die Heizfläche abdeckenden Stauscheibe (27) zum Deckel (2) bzw. zur Tür (2) hin erstrecken und in einem Abstand vom Deckel (2) bzw. von der Tür (2) enden, der etwa der radialen Tiefe der nischenartigen Erweiterungen (14, 15) entspricht.

8. Vorrichtung nach einem der Ansprüche 6 oder 7, dadurch gekennzeichnet, daß der Temperaturfühler (30) in einer der nischenartigen Erweiterungen (14) angeordnet ist.

9. Vorrichtung nach Anspruch 3, dadurch gekennzeichnet, daß der Druckluft- bzw. Druckgasanschluß (36) des Druckbehälters (1, 1') auf der Saugseite des Axial-Gebläserades (22) angeordnet ist.

10. Vorrichtung nach Anspruch 3, dadurch gekennzeichnet, daß das Axial-Gebläserad (22) im unteren Teil eines im Querschnitt kreis- oder ellipsenförmigen Innenraumes (16) des Druckbehälters (1) mit vertikaler Blasrichtung angeordnet ist.

11. Vorrichtung nach Anspruch 10, dadurch gekennzeichnet, daß der sich oberhalb einer horizontalen Stellfläche, auf welcher der Objekthalter (33) abstellbar sind, befindliche Raumbereich des Druckbehälterinnenraums (16) auf wenigstens drei Seiten von Wärmespeicherwandelementen umgeben ist, die aus Material mit hoher Wärmeleitfähigkeit bestehen und wenigstens teilweise eine strömungsdurchlässige Struktur aufweisen, und die derart angeordnet sind, daß sie von den Innenwandflächen des Druckbehälters (1) allseits wenigstens einen Mindestabstand von ca. 10 mm aufweisen.

12. Vorrichtung nach Anspruch 4 bis 7, dadurch gekennzeichnet, daß im Flächenbereich der dem Axial-Gebläserad (22) abströmseitig gegenüberliegenden Innenwand des Druckbehälters (1, 1') eine zur Strahlungspolymerisation geeignete Strahlungsquelle, z.B. ein UV-Strahler, angeordnet ist und das die der Strahlungsquelle zugekehrten Flächen des Axial-Gebläserades (22) verspiegelt sind.

13. Vorrichtung nach Anspruch 6 oder einem der Ansprüche 4 bis 10, dadurch gekennzeichnet, daß eine Vorwärmthermostatschaltung vorgesehen ist, mittels welcher die Innenraumtemperatur des Druckbehälters (1, 1') auf einer konstanten Vorwärmtemperatur von z.B. 80° C gehalten wird.

## Claims

1. Method for the thermal polymerisation of synthetic materials for dental purposes in a closed chamber of a pressure container (1, 1'), in which a heated inert gas or air surrounding the polymerisation material (34) on all sides is placed under excess pressure, characterised in that the inert gas or the air in the closed chamber (16) of the pressure container (1, 1') is heated at a pressure of at least 4 bars, preferably 5 to 10 bars, during a short heating-up time lasting a maximum of two minutes, to 90° to 120°C and both during the heating-up time as well as during the subsequent polymerisation phase is circulated continuously in a positively guided axial stream produced in front of a heating plane in the central region of the chamber, which stream flows around the polymerisation material (34) behind the heating plane, in an at least approximately uniform distribution and which in the counter-flow direction returns along the pressure container wall to its point of origin.

2. Method according to Claim 1, characterised in that the inert gas consists of one of the following gases: nitrogen, carbon dioxide, helium, argon.

3. Apparatus for carrying out the method according to Claim 1, consisting of a pressure container (1, 1') able to be closed by means of a lid (2) or a door (2), with an incorporated heating device (24) heating the inert gas or the air and able to be controlled by a temperature sensor (30) and a compressed gas or compressed air connection (36), characterised in that in the pressure container (1, 1'), on the side of a heating coil (24) lying in one plane, which side is located opposite a specimen holder (33), an axial impeller (22) driven by an electric motor is located, which produces an air or gas stream directed onto the polymerisation material (34) through the heating coil (24) and a baffle plate (27) in the form of a grating, lattice or screen, which is permeable to flow, is provided with lateral guide members (28, 29) and is disposed between the heating coil (24) and the specimen holder (33).

4. Apparatus according to one of Claims 2 or 3, characterised in that the axial impeller (27) is at the same or at a greater distance from the inner wall surface on the inlet side of the pressure container (1, 1') than for example from the heating device (24).

5. Apparatus according to one of Claims 2 to 4, characterised in that the heating device (24) and the axial impeller (22) is located in the vicinity of the inner surface of the pressure container (1, 1') opposite the lid (2) or the door (2) and is arranged to extend substantially parallel thereto.

6. Apparatus according to Claim 5, characterised in that the interior (16) of the pressure container (1, 1') has a substantially cylindrical or slightly conical shape and comprises two diametrically opposed, recess-like enlargements (14, 15).

7. Apparatus according to Claim 6, characterised in that the recess-like enlargements (14, 15) are covered at least partly by wall members in the form of a grid, lattice or screen, which extend from the baffle plate (27) covering the heating surface towards the lid (2) or the door (2) and terminate at a distance from the lid (2) or the door (2) which corresponds approximately to the radial depth or the recess-like enlargements (14, 15).

8. Apparatus according to one of Claims 6 or 7, characterised in that the temperature sensor (30) is located in one of the recess-like enlargements (14).

9. Apparatus according to Claim 3, characterised in that the compressed air or compressed gas connection (36) of the pressure container (1, 1') is located on the suction side of the axial impeller (22).

10. Apparatus according to Claim 3, characterised in that the axial impeller (22) is located in the lower part of an interior space (16) of circular or elliptical cross-section of the pressure container (1) with a vertical blowing direction.

11. Apparatus according to Claim 10, characterised in that the region of the pressure container inner space (16) located above a horizontal locating surface, on which the specimen holder (33) can be located, is surrounded on at least three sides by heat-storage wall members, which consist of a material having high thermal conductivity and have at least partly a structure which is permeable to flow and which are arranged so that on all sides they have at least a minimum spacing of approximately 10 mm from the inner wall surfaces of the pressure container (1).

12. Apparatus according to Claims 4 to 7, characterised in that in the surface region of the inner wall of the pressure container (1, 1') located opposite the axial impeller (22) on the outflow side, a source of radiation, for example a UV-radiator suitable for radiation polymerisation is located and that the surfaces of the axial impeller (22) facing the source of radiation are coated with metal.

13. Apparatus according to Claim 6 or one of Claims 4 to 10, characterised in that a preheating thermostat circuit is provided, by means of which the interior temperature of the pressure container (1, 1') is kept at a constant preheating temperature of for example 80°C.

**Revendications**

1. Procédé pour la polymérisation thermique de matières plastiques, à usage dentaire, dans un espace clos d'un réservoir sous pression (1, 1') dans lequel est introduit un gaz inerte ou de l'air sous pression chauffé qui entoure la matière à polymériser (34) de tous les côtés, caractérisé en ce que le gaz inerte ou l'air dans l'espace clos (16) du réservoir sous pression (1, 1') est porté, sous une pression d'au moins 4 bars, de préférence 5 à 10 bars, durant un court temps de chauffage de deux minutes au maximum, à une température de 90 à 120°C et est amené, aussi bien durant le temps de chauffage que durant la phase de polymérisation subséquente, à circuler en permanence sous la forme d'un courant axial forcé se formant devant un plan chauffant dans la région centrale dudit espace et qui derrière le plan chauffant, en se répartissant au moins à peu près uniformément, baigne la matière à polymériser (34) et, en passant à contre-courant le long de la paroi du réservoir sous pression, retourne à son origine.

2. Procédé selon la revendication 1, caractérisé en ce que le gaz inerte est l'un des gaz suivants : azote, gaz carbonique, hélium ou argon.

3. Dispositif pour la mise en oeuvre du procédé selon la revendication 1, constitué d'un réservoir sous pression (1, 1'), pouvant être fermé au moyen d'un couvercle (2) ou d'une porte (2), avec un appareil chauffant (24) incorporé qui chauffe le gaz inerte ou l'air et peut être commandé par un capteur de température (30), et avec un raccord (36) à gaz sous pression ou à air comprimé, caractérisé en ce que dans le réservoir sous pression (1, 1') est disposée, du côté d'une spirale chauffante (24), située dans un plan, qui est opposé à un porte-objet (33), une roue de ventilateur axial (22) entraînée par un moteur électrique et qui produit un courant d'air ou de gaz dirigé sur la matière à polymériser en passant par la spirale chauffante (24) et à travers un disque de retenue (27) qui, perméable à ce courant et réalisé en forme de grille, de réseau ou de tamis, est disposé entre la spirale chauffante (24) et le porte-objet (33) et muni d'éléments de guidage latéraux (28, 29).

4. Dispositif selon la revendication 2 ou 3, caractérisé en ce que la roue de ventilateur axial (27) présente par rapport à la surface de paroi intérieure, située du côté afflux, du réservoir sous pression (1, 1') une distance égale ou supérieure à celle dont elle est éloignée de l'appareil chauffant (24).

5. Dispositif selon l'une quelconque des revendications 2 à 4, caractérisé en ce que l'appareil chauffant (24) et la roue de ventilateur axial (22) sont disposés à proximité de la surface intérieure du réservoir sous pression (1, 1') qui se trouve à l'opposé du couvercle (2) ou de la porte (2) et sont montés de façon à s'étendre sensiblement parallèlement à cette surface intérieure.

6. Dispositif selon la revendication 5, caractérisé en ce que l'espace intérieur (16) du réservoir sous pression (1, 1') présente une forme sensiblement cylindrique ou légèrement conique et comporte deux parties élargies diamétralement opposées (14, 15) du genre niches.

7. Dispositif selon la revendication 6, caractérisé en ce que les parties élargies (14, 15) du genre niches sont recouvertes au moins partiellement d'éléments de paroi en forme de grille, de réseau ou de tamis qui s'étendent à partir du disque de retenue (27), recouvrant la surface chauffante, en direction du couvercle (2) ou de la porte (2) et se terminent à une distance du couvercle (2) ou de la porte (2) qui correspond sensiblement à la profondeur radiale des parties élargies (14, 15) du genre niches.

8. Dispositif selon la revendication 6 ou 7, caractérisé en ce que le capteur de température (30) est monté dans l'une (14) des parties élargies du genre niches.

9. Dispositif selon la revendication 3, caractérisé en ce que le raccord (36) à air ou à gaz comprimé du réservoir sous pression (1, 1') est disposé du côté aspiration de la roue de ventilateur axial (22).

10. Dispositif selon la revendication 3, caractérisé en ce que la roue de ventilateur axial (22) est disposée dans la partie inférieure d'un espace intérieur (16), de section circulaire ou elliptique, du réservoir sous pression (1), avec une direction de soufflage verticale.

11. Dispositif selon la revendication 10, caractérisé en ce que la région de l'espace intérieur (16) du réservoir sous pression située au-dessus d'une surface de pose horizontale, sur laquelle le ou les porte-objet (33) peuvent être déposés, est entourée au moins de trois côtés par des éléments de paroi accumulateurs de chaleur qui sont en une matière à haute conductivité thermique et présentent au moins partiellement une structure perméable à l'écoulement et qui sont disposés de telle manière qu'ils se trouvent par rapport aux surfaces de paroi intérieure du réservoir sous pression (1) de tous les côtés au moins à une distance minimale d'environ 10 mm.

12. Dispositif selon l'une quelconque des revendications 4 à 7, caractérisé en ce que dans la région de l'aire de la paroi intérieure du réservoir sous pression (1, 1') située du côté aval, à l'opposé de la roue de ventilateur axial (22), est disposée une source de rayonnement appropriée à la polymérisation par rayonnement, par exemple une source de rayons UV, et en ce que les surfaces de la roue de ventilateur axial (22) tournées vers la source de rayonnement sont revêtues d'une couche réfléchissante.

13. Dispositif selon la revendication 6 ou l'une quelconques des revendications 4 à 6, caractérisé en ce qu'il est prévu un circuit thermostatique de préchauffage au moyen duquel la température de l'espace intérieur du réservoir sous pression (1, 1') est maintenue à une température de préchauffage constante, par exemple de 80°C.

Fig. 2

Fig. 3

Fig. 1

Fig. 6

Fig. 4

Fig. 5